(19) Europäisches Patentamt
European Patent Office
Office européen des brevets

(11) **EP 3 872 960 A1**

(12) **EUROPEAN PATENT APPLICATION**

(43) Date of publication:
**01.09.2021 Bulletin 2021/35**

(51) Int Cl.:
***H02J 50/90*** *(2016.01)* ***H05B 6/10*** *(2006.01)*

(21) Application number: **21159341.3**

(22) Date of filing: **25.02.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.02.2020 KR 20200024270**

(71) Applicant: **LG Electronics Inc.**
**Seoul 07336 (KR)**

(72) Inventors:
• **Moon, Hyunwook**
**Seoul 08592 (KR)**
• **Kim, Euisung**
**Seoul 08592 (KR)**
• **Kim, Yangkyeong**
**Seoul 08592 (KR)**

(74) Representative: **Ter Meer Steinmeister & Partner Patentanwälte mbB**
**Nymphenburger Straße 4**
**80335 München (DE)**

(54) **WIRELESS POWER TRANSMISSION APPARATUS FOR INDUCTION HEATING AND CONTROL METHOD THEREOF**

(57) A wireless power transmission apparatus for induction heating includes a working coil configured to change a mode depending on selection of a user, to change a frequency depending on the mode, and to induction-heat a target object, or to wirelessly transmit power to the target object, an inverter that is turned on and off depending on an operation frequency and configured to generate the power, and a controller configured to calculate an eccentricity degree between the working coil and a reception coil of the target object and to control the operation frequency depending on the calculated eccentricity degree in a preparation period prior to wireless power transfer when the user selects a wireless power transfer mode.

FIG. 1

Description

## CROSS-REFERENCE TO THE RELATED APPLICATION

This application claims priority from Korean Patent Application No. 10-2020-0024270, filed on February 27, 2020, in the Korean Intellectual Property Office.

## BACKGROUND OF THE INVENTION

### 1. Field of the invention

The present invention relates to a wireless power transmission apparatus, and more particularly, to a wireless power transmission apparatus for induction heating and a control method thereof.

### 2. Description of the Related Art

Wireless charging refers to a method of charging a device by wirelessly transmitting power through the atmosphere instead of a method of charging a device by transmitting power by wire.

According to the basic principle of wireless charging, when alternating current (AC) flows in a transmission coil, a battery is charged by forming a magnetic field around a transmission coil, allowing AC to flow in a reception coil due to influence of the magnetic field, and rectifying the AC.

Various small-size kitchen utensils used in a kitchen, that is, small home appliances require power supply, and thus, receive power by connecting an electric cord (power connection cable) that is separately included in electronic devices to a socket. In this case, there is a problem in that a plurality of electric cords adversely affects management, safety, or space utilization.

Thus, recently, the demand for wireless power charging of small home appliances used in a kitchen has rapidly increased.

Devices that need to be heated using induced current among small home appliances used in a kitchen have increasingly been spread.

Such a heating device using induced current uses an induction method of heating the device via electron induction by generating a magnetic field and is operated in the same way as an electric range.

That is, a general electron induction heating device allows high-frequency current to flow in a working coil or heating coil installed therein.

When the high-frequency current flows in the working coil or the heating coil, a strong line of magnetic force is generated. The line of magnetic force generated in the working coil or the heating coil forms eddy current while being transmitted through a cooking tool. Thus, as eddy current flows in a cooking tool, heat is generated to heat a container itself, and materials in the container are heated as the container is heated.

Such an induction heating device is disclosed in detail in Korean Patent Publication No. 10-2016-0123672.

As such, there is the increasing demand for a multi-functional wireless power transmission device that is capable of performing induction heating or wireless charging depending on a type of a small home appliance used in a kitchen.

The multi-functional wireless power transmission device is capable of performing induction heating or wireless power transmission by changing a frequency using one working coil or heating coil according to mode selection of a user.

When induction heating or wireless power transfer is performed on a target small home appliance of a multi-functional wireless power transmission device, a reception and a working coil of the target small home appliance need to be aligned with each other.

That is, when the two coils that perform wireless power transfer are not aligned with each other and are eccentrically arranged, power transmission efficiency is remarkably lowered.

To this end, technologies of determining eccentricity and providing an alarm therefor or compensating for this in wireless power transfer are proposed.

For example, Korean Patent Registration No. 17-6449681 discloses a battery charging system for a vehicle through wireless power transfer, and discloses that information on a charging state of a reception side is received, and when a charging state value is less than a reference value, an alignment state is adjusted by moving a coil of the reception to achieve a concentricity state.

However, in the case of the conventional art, it is required to change the coil of the reception side for alignment. However, in the case of wireless power transfer of a small home appliance, it is required to continuously provide an alarm to a user to match a state of transmission/reception coils with concentricity, and alignment state match is a factor that impedes use convenience of a wireless small home appliance.

US Patent Registration No. 8912686 discloses that a device formed of a magnetic component of a reception side is automatically aligned with a transmission coil by allowing DC current to flow when an alignment state of transmission/reception coils is not matched in a wireless power transmission system.

As such, when a reception coil includes a magnetic component, a metallic foreign object is attached thereto together, and thus, there is a risk of ignition or fuming due to a magnetic field generated during wireless power transfer.

[Cited Reference]

[Patent Document]

Korean Patent Registration No. 17-6449681 (Registered on July 27, 2017)

US Patent No. 8912686 (Registered on December 16, 2014)

US Patent No. US 2019-0123589 (Published on April 25, 2019)

Korean Patent Publication No. 2014-01004242 (Published on August 28, 2014)

## SUMMARY OF THE INVENTION

A first objective of the present invention is to provide a wireless power transmission apparatus for determining whether eccentricity occurs in a small home appliance as a target object, compensating for this, and performing wireless power transfer (WPT) when a multi-functional wireless power transmission device using one working coil is in a wireless power transmission mode. That is, the present invention provides a wireless power transmission apparatus for compensating for eccentricity by changing transmission power when eccentricity occurs rather than changing a position of a target object as disclosed in Korean Patent Registration No. 17-6449681 or US Patent No. 8912686.

A second objective of the present is to provide a wireless power transmission apparatus for determining whether eccentricity occurs to compensate to eccentricity prior to power transfer even if information is not received from a positioned target small home appliance when user mode selection is a wireless power transmission mode.

A third second objective of the present is to provide a wireless power transmission apparatus for providing an alarm to a user prior to wireless power transfer when a wireless power transmission mode is selected, if a target object is a small home appliance having a reception coil and excessive eccentricity occurs between the corresponding reception coil and a working coil of a transmission side.

A fourth objective of the present invention is to provide a wireless power transmission apparatus for controlling a start frequency of frequency sweep or an sweep interval and performing wireless power transfer to which an eccentricity degree is applied, thereby enhancing power transmission efficiency during wireless power transfer depending on an eccentricity degree.

At least one of these objects is solved by the subject-matter of the independent claims. Further advantageous embodiments and refinements are described in the respective dependent claims.

A wireless power transmission apparatus according to embodiments of the present disclosure may be configured to wirelessly transfer power to a target object. The power may be wirelessly transferred from a working coil of the wireless power transmission apparatus to a reception coil of the target object. Herein, power transmission and power transfer are equally used.

The target object may be an electronic product or appliance, a (small) home appliance having a reception coil, a (small) home appliance that does not have the reception coil, a general heating cooking container that is not an electronic product, or a foreign object. The wireless power transmission apparatus may be integrated into a kitchen stove, for example under an upper plate of the kitchen stove, or the like. For example, the target object may be positioned on the upper plate. Thus, the working coil of the wireless power transmission apparatus and the reception coil of the target object may overlap with each other.

The wireless power transmission apparatus may determine whether a target object has a reception coil or does not have a reception coil, and/or whether the reception coil of the target objected is eccentric to the working coil of the wireless power transmission apparatus. Also, the wireless power transmission apparatus may determine the eccentricity degree. Calculating or determining the eccentricity degree may include determining whether eccentricity occurs between the working coil and the reception coil, e.g. if there is no eccentricity, the eccentricity degree may be zero.

The wireless power transmission apparatus may function in an induction heating mode for heating the target object and may function in a wireless power transmission mode for wirelessly transmitting power to a target object using the receiving coil of the target object.

Depending on the determination whether the target object has a reception coil, the wireless power transmission apparatus may determine whether to operate in the induction heating mode or to operate in the wireless power transmission mode.

Further, if it is determined that the eccentricity degree between the working coil and the reception coil is too large, the wireless power transmission apparatus may output an alarm. Thus, the wireless power transmission apparatus may provide an alarm to a user prior to wireless power transmission, if a target object has a reception coil and excessive eccentricity occurs between the reception coil and the working coil.

The determining whether a target object has a reception coil or does not have a reception coil, and whether the reception coil of the target objected is eccentric to the working coil of the wireless power transmission apparatus may be carried out during a preparation period prior to a normal operation mode, wherein the normal operation mode may be a mode of wirelessly transmitting power from the wireless power transmission apparatus to the target object.

In case it is determined that the target object does not include a reception coil, the wireless power transmission apparatus may operate in the induction heating mode for induction heating the target object.

The external power supply may be a mains power supply or main power.

In accordance with an aspect of the present disclosure, a wireless power transmission apparatus for induction heating includes a working coil configured to change a mode depending on selection of a user, to change a frequency depending on the mode, and to induction-heat a target object, or to wirelessly transmit power to the target object, an inverter that is turned on and off depending on an operation frequency and configured to generate the power, and a controller configured to calculate an eccentricity degree between the working coil and a reception coil of the target object and to control the operation frequency depending on the calculated eccentricity degree in a preparation period prior to wireless power transfer when the user selects a wireless power transfer mode. The controller may be configured to detect whether a target object is present. The controller may be configured to perform a control method according to any one of the herein described embodiments.

The controller may include the preparation period prior to a normal mode for performing the wireless power transfer. Whether the target object includes the reception coil and the eccentricity degree may be determined in the preparation period.

The wireless power transmission apparatus may further include an upper glass on which the target object is positioned, and a user input unit configured to guide or receive mode selection from the user.

When receiving mode selection information from the user input unit, the controller may enter an eccentricity detection mode and may sequentially determine whether the target object is a small appliance having a reception coil and whether eccentricity occurs.

The controller may read resonance current of the working coil and may determine the target object and the eccentricity degree in the eccentricity detection mode.

The controller may read the resonance current a plurality of numbers of times for a predetermined time, may perform integration on the resonance current, and may determine the target object and an eccentricity degree based on an integrated value of the resonance current.

The controller may compensate for the integrated value of the resonance current depending on amplitude of main power of the wireless power transmission apparatus for induction heating and may determine the target object and the eccentricity degree.

The controller may calculate the integrated value compensated for depending on the amplitude of the main power with respect to the integrated value of the resonance current. When the compensated integrated value is smaller than a first threshold value, the controller may determine that the target object is a small home appliance having the reception coil.

The eccentricity degree may be calculated based on the integrated value of the resonance current. When the calculated eccentricity degree is equal to or less than a second threshold value, the operation frequency may be controlled depending on the eccentricity degree.

The controller may count the resonance current at a zero-voltage point of the main power.

The operation frequency may be controlled to be swept to a final operation frequency by lowering a start frequency for wireless power transfer as the eccentricity degree is increased. The final frequency may denote an operating frequency at which wireless power transmission is actually performed, and generally reaches the final frequency by a frequency sweep. The operation frequency may be controlled to be swept to a final operation frequency by setting a deviation for sweep from a start frequency for wireless power transfer to be increased as the eccentricity degree is increased.

In accordance with another aspect of the present disclosure, a method of driving a wireless power transmission apparatus for induction heating including a working coil configured to change a mode depending on selection of a user, and to induction-heat a target object depending on the mode, or to wirelessly transmit power to the target object includes checking that selection information of the user is a wireless power transmission mode, a preparation operation of detecting the target object, determining an eccentricity degree between the target object and the working coil, and setting an operation frequency of an inverter for wireless power transfer, and a normal operation mode operation of performing the wireless power transfer at the operation frequency on a target object for the wireless power transfer. The wireless power transmission apparatus may be a wireless power transmission apparatus according to any one of the herein described embodiments.

The preparation operation may include detecting resonance current while driving the inverter at a first operation frequency and determining whether the target object is a small home appliance having a reception coil, calculating an eccentricity degree between the reception coil and the working coil depending on the resonance current, and controlling an operation frequency for the wireless power transfer depending on the eccentricity degree.

The method may further include, when detecting the resonance current, reading the resonance current a plurality of numbers of times for a predetermined time, performing integration on the resonance current, and determining the target object based on an integrated value of the resonance current.

The method may further include compensating for the integrated value of the resonance current depending on amplitude of main power of the wireless power transmission apparatus for induction heating and determining the target object.

When the compensated integrated value is smaller than a first threshold value, the target object may be a small home appliance having the reception coil.

The method may further include calculating the eccentricity degree based on the integrated value of the resonance current. When the calculated eccentricity degree is equal to or greater than a second threshold value, controlling the operation frequency depending on the eccentricity degree.

The resonance current may be counted at a zero-voltage point of the main power.

The controlling the operation frequency may include controlling the operation frequency to be swept to a final operation frequency by lowering a start frequency for wireless power transfer as the eccentricity degree is increased.

The controlling the operation frequency may include controlling the operation frequency to be swept to a final operation frequency by setting a deviation for sweep from a start frequency for wireless power transfer to be increased as the eccentricity degree is increased.

## BRIEF DESCRIPTION OF THE DRAWINGS

The above and other objects, features and other advantages of the present invention will be more clearly understood from the following detailed description taken in conjunction with the accompanying drawings, in which:

FIG. 1 is an upper perspective view of a wireless power transmission apparatus for induction heating according to an embodiment of the present invention;
FIG. 2 is a cross-sectional view of the wireless power transmission apparatus for induction heating of FIG. 1;
FIG. 3 is a circuit diagram for explaining an induction heating state according to an embodiment of the present invention;
FIG. 4 is a circuit diagram for explaining wireless power transfer (WPT) of a wireless power transmission apparatus for induction heating according to an embodiment of the present invention;
FIG. 5 is a schematic flowchart of a mode of a wireless power transmission apparatus for induction heating according to an embodiment of the present invention;
FIG. 6 is a diagram showing a structure of a transmission apparatus and a reception apparatus with respect to the flowchart of FIG. 5
FIG. 7 is a schematic flowchart in a wireless power transmission mode of a wireless power transmission apparatus for induction heating according to an embodiment of the present invention;
FIG. 8 is a flowchart of determination of a target object of FIG. 7;
FIG. 9 is a flowchart of determination of an eccentricity degree of FIG. 7;
FIG. 10 is a state diagram showing an alignment state between a reception coil and a working coil;
FIG. 11 is a graph showing a difference in a load output value in eccentricity and concentricity;
FIGs. 12A and 12B are graphs showing a compensation method depending on an eccentricity degree; and
FIG. 13 is a flowchart for explaining an operation after determination of an eccentricity degree.

## DETAILED DESCRIPTION OF THE PREFERRED EMBODIMENTS

Terms indicating directions, such as "front (F)/rear (R)/left (Le)/ right (Ri)/up (U)/down (D)" used below are defined based on the accompanying drawings, but they are used only to promote a clear understanding of the present invention, and the definition of directions is changed according to a reference.

Terms such as "first" and "second" are used herein merely for the purpose of distinguishing one constituent element from another constituent element, and do not define the order, importance, or master-servant relationship of components. For example, it may be possible to embody the invention so as to include only the second component without the first component.

Components in the following drawings may be exaggerated, omitted, or schematically illustrated for convenience and clarity of explanation. The sizes and areas of the components do not accurately reflect their actual sizes.

In addition, angles and directions used in description of the configuration of the present invention are based on the accompanying drawings. If a reference or a positional relationship between angles is not clearly set forth in the description of the configuration in the specification, the related drawings are to be referred to.

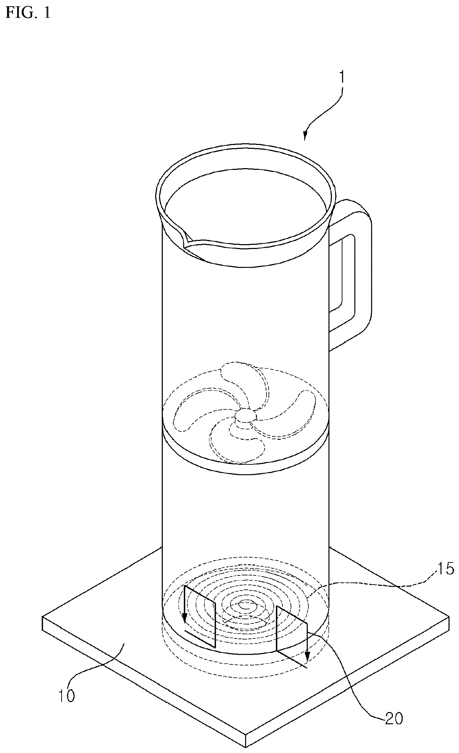

Hereinafter, a wireless power transmission apparatus for induction heating will be described in detail with reference to FIGs. 1 to 4.

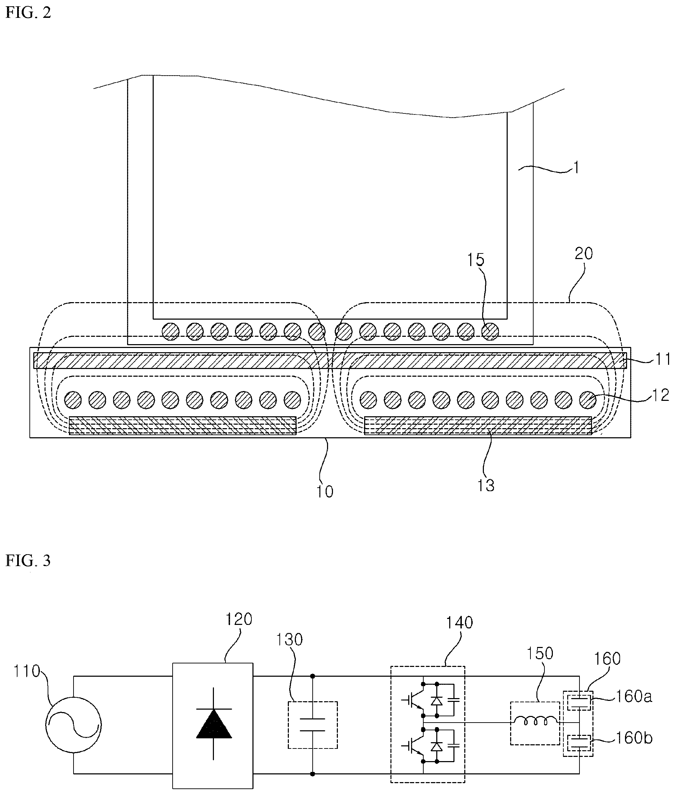

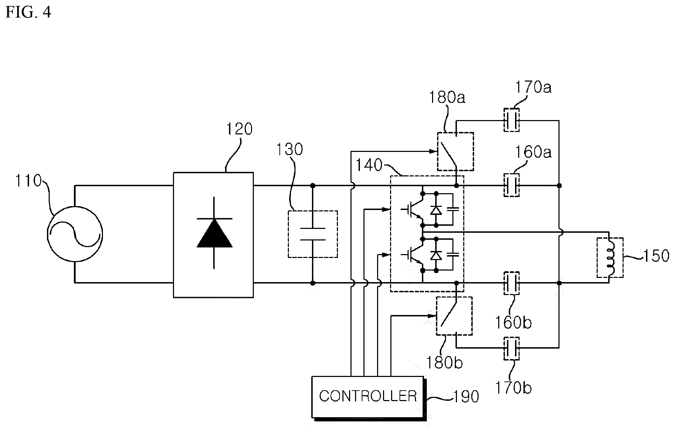

FIG. 1 is an upper perspective view of a wireless power transmission apparatus for induction heating according to an embodiment of the present invention. FIG. 2 is a cross-sectional view of the wireless power transmission apparatus for induction heating of FIG. 1. FIG. 3 is a circuit diagram for explaining an induction heating state according to an embodiment of the present invention. FIG. 4 is a circuit diagram for explaining wireless power transfer (WPT) of a wireless power transmission apparatus for induction heating according to an embodiment of the present invention.

Referring to FIGs. 1 and 2, a target object 1 may be positioned on a wireless power transmission apparatus 10. The wireless power transmission apparatus 10 may heat the target object 1 positioned thereon or may wirelessly transmit power to the target object 1.

The target object 1 may be a small home appliance having a reception coil 15, a small home appliance that does not have the reception coil 15, a general heating cooking container that is not an electronic product, or a foreign object.

The small home appliance having the reception coil 15 may wirelessly receive power using the reception coil 15 through the wireless power transmission apparatus 10 and may perform a main operation using the corresponding power, and may be for example, a wireless blender or a wireless oven toaster.

The small home appliance that does not have the reception coil 15 may be a home appliance that is directly heated by generating a magnetic field through a working coil 12, that is, a transmission coil of the wireless power transmission apparatus 10, and may be an electronic product that is not a general cooking container. An example thereof may be a wireless electric kettle or a wireless electric rice cooker, and the small home appliance that does not have the reception coil 15 may include a pickup coil for power supply to a module that requires driving power from a region for performing a main operation, that is, a region except for a region that receives heat and performs a function. The pickup coil may be positioned away from a region corresponding to the working coil 12 that is a transmission coil, and may wirelessly receive power and may supply power to a module, for example, a control module such as a communication module, an interface, or a display.

The general cooking container may refer to a container including an electrical resistance component that is to be heated by a magnetic field 20 generated from the working coil 12 and through which the magnetic field 20 passes. When a material of the cooking container includes an electrical resistance component, the magnetic field 20 may generate eddy current to the cooking container. Eddy current may heat the heating container itself, and the heat may be conducted and transmitted to an internal side of the cooking container. Thus, contents in the cooking container may be cooked.

When the foreign object is positioned at a position of the target object 1, the foreign object tends to be a material having an electrical resistance component that impedes wireless power transfer (WPT) and may be an iron bar such as a spoon or a chopstick.

The wireless power transmission apparatus 10 may function as an electronic induction heating apparatus or a wireless power transmission apparatus according to user selection.

That is, the wireless power transmission apparatus 10 may function in an induction heating mode for heating a general heating container or may function in a wireless power transmission mode for wirelessly transmitting power to a small home appliance that has or does not have the reception coil 15 with respect to one working coil 12 according to user selection.

The multi-functional wireless power transmission device 10 may include an upper glass 11 and a casing (not shown) including at least on working coil 12, as shown in FIG. 2. First, components included in the wireless power transmission apparatus 10 will be described in detail.

The upper glass 11 may protect an internal part of the wireless power transmission apparatus 10 and may support the target object 1. In detail, the upper glass 11 may be formed of tempered glass of a ceramic material obtained by synthesizing various minerals. Thus, the upper glass 11 may protect an internal part of the wireless power transmission apparatus 10 from the outside. The upper glass 11 may support the target object 1 positioned thereon. Thus, the target object 1 may be positioned on the upper glass 11.

The working coil 12 may wirelessly transmit power to the target object 1 depending on the type of the target object 1 or user mode selection or may generate a magnetic field for heating, and at least one working coil 12 may be configured according to a design. In this case, a region in which the target object 1 is disposed may be determined depending on each coil 12.

A user input unit (not shown) for determining a mode of the wireless power transmission apparatus may be disposed at one side of the upper glass 11.

In detail, the working coil 12 may be disposed below the upper glass 11. Current may or may not flow in the working coil 12 depending on power on/off of the wireless power transmission apparatus 10. When current flows in the working coil 12, the amount of current flowing in the working coil 12 may also vary depending on the mode and output of the wireless power transmission apparatus 10.

When current flows in the working coil 12, the working coil 12 may generate the magnetic field 20. As the amount of current flowing in the working coil 12 is increased, the magnetic field 20 may be more largely generated.

A direction of the magnetic field 20 generated by the working coil 12 may be determined depending on a direction of the current flowing in the working coil 12. Thus, when alternating current (AC) flows in the working coil 12, the direction of the magnetic field 20 may be converted by a frequency of the AC. For example, when AC of 60 Hz flows in the working coil 12, the direction of the magnetic field may be converted 60 times per second.

A driving module (not shown) that is electrically connected to the user input unit and the working coil 12, receives a voltage and current from a commercially available power source, converts the received voltage and current, and supplies power to the working coil 12 according to user input may be disposed in the casing.

The driving module may be configured in the form of a plurality of chips installed on one printed circuit board without being limited thereto or may be configured as one integrated chip.

The wireless power transmission apparatus 10 may include ferrite 13 therein and may protect the driving module therein.

That is, the ferrite 13 may function as a shield that blocks influence of the magnetic field generated in the working coil 12 or an electromagnetic field generated outside the working coil 12 on the driving module in the wireless power transmission apparatus 10.

To this end, the ferrite 13 may be formed of a material with very high permeability. The ferrite 13 may guide the magnetic field introduced into the wireless power transmission apparatus 10 to flow through the ferrite 13 rather than being discharged.

Although FIGs. 1 and 2 show the wireless power transmission apparatus 10 including at least one working coil 12, the wireless power transmission apparatus 10 include two to four working coils 12 in a general home.

The respective working coils 12 may have different sizes, and current of specific frequency may flow in each coil 12 through inverter-driving under control of the driving module, and thus, in the induction heating mode, target power corresponding to a firepower level selected by a user may be generated and heat corresponding to the target power may be generated.

In the wireless power transmission mode, current of different frequencies may flow through inverter-driving under control of the driving module, and thus, power may be wirelessly transmitted to a small home appliance.

To this end, the respective working coils 12 may be connected to inverters in the driving module, and the plurality of working coils 12 may be connected in parallel or series to each other by a switch and may be connected to one inverter.

When the corresponding wireless power transmission apparatus 10 is operated in the induction heating mode according to user selection, a magnetic field may be generated by current of a predetermined frequency and may be transmitted through a heating container positioned on the upper glass 11.

In this case, when an electrical resistance component is included in a material of a cooking container, the magnetic field may generate eddy current in the cooking container. The eddy current may heat the cooking container itself, and the heat may be conducted and transmitted to an internal side of the cooking container. Thus, the induction heating mode may proceed in a method of cooking contents in the cooking container.

Movement of the magnetic field generated in the working coil 12 by the ferrite 13 is shown in FIG. 2.

With reference to a circuit diagram in which the wireless power transmission apparatus 10 is operated in the induction heating mode, the wireless power transmission apparatus 10 may have a structure shown in FIG. 3.

In detail, FIG. 3 is a circuit diagram of a wireless power transmission apparatus in an electromagnetic induction heating mode when the wireless power transmission apparatus includes one inverter 140 and one working coil 12 (hereinafter, referred to as 150). The wireless power transmission apparatus 10 in the electromagnetic induction heating mode may include a rectifier 120, a direct current (DC) link capacitor 130, an inverter 140, the working coil 12 (150), and a resonance capacitor 160.

An external power source 110 may be an alternating current (AC) input power source. The external power source 110 may supply AC power to an electromagnetic induction heating cooking device. In more detail, the external power source 110 may supply AC voltage to the rectifier 120 of the electromagnetic induction heating cooking device.

The rectifier 120 may be an electrical circuit for converting AC into DC and may convert AC voltage supplied through the external power source 110 into DC voltage. In this case, opposite ends of DC output through the rectifier 120 may be referred to as DC links. A voltage measured at the DC opposite ends may be referred to as a DC link voltage. When a resonance curve is not changed, output power may be varied depending on a DC link voltage. The DC link capacitor 130 may function as a buffer between the external power source 110 and the inverter 140. In detail, the DC link capacitor 130 may maintain the DC link voltage converted through the rectifier 120 and may supply the voltage to the inverter 140.

The inverter 140 may switch a voltage applied to the working coil 12 (150) and may allow high-frequency current to flow in the working coil 12 (150). In general, the inverter 140 may drive a switching device including an insulated gate bipolar transistor (IGBT) and may allow high-frequency current to flow in the working coil 12 (150), and thus, a high-frequency magnetic field may be formed in the working coil 12 (150).

Current may or may not flow in the working coil 12 (150) according to whether the switching device is driven. When current flows in the working coil 12 (150), a magnetic field may be generated. As current flows in the working coil 12 (150), a magnetic field may be generated to heat a cooking container.

As such, in the electromagnetic induction heating mode, the wireless power transmission apparatus 10 may heat the cooking container using the working coil 12 (150) in electromagnetic induction.

When the wireless power transmission apparatus according to the present invention functions in a wireless power transmission mode, the working coil 12 (150) used in inductive heating may be used in wireless power transfer (WPT) in the same way.

Wireless power transfer (WPT) refers to technology of transmitting power without wire. A method that is currently and mainly used in wireless power transfer (WPT) may include a magnetic induction (MI) method or a magnetic resonance (MR) method. Each method will be described in detail below. The magnetic induction (MI) method uses a magnetic induction phenomenon between a primary coil and a secondary coil. In detail, when current is injected into a primary (transmission) coil, a magnetic field may be generated. Induced current may be generated in the secondary (reception) coil by the magnetic field generated in the primary coil. The magnetic field generated using a magnetic induction method is weak, and thus, the primary coil and the secondary coil need to be positioned very adjacent to each other.

The magnetic resonance (MR) method is a method in which primary and secondary coils transmit and receive power using the same frequency. That is, when a magnetic field that oscillates at a resonance frequency is generated in the primary coil, the secondary coil may be designed at the same resonance frequency as the magnetic field generated in the primary coil and may receive energy.

As such, a corresponding function may be selectively performed according to user mode selection using the same structure by using a coil used in wireless power transfer (WPT) as the working coil 12 used in the induction heating mode.

Referring back to FIG. 3, one side of the working coil 12 (150) may be connected to a node of a switching device of the inverter 140, and the other side of the working coil 12 (150) may be connected to the resonance capacitor 160. The switching device may be driven by a controller 190 and may be controlled according to a switching time output from the controller 190, and as the switching device is alternately operated, a high-frequency voltage may be applied to the working coil 12 (150). An on/off time of the switching device applied from the controller 190 is controlled to be gradually compensated for, and thus, a voltage applied to the working coil 12 (150) may be changed to a high voltage from a low voltage.

The controller 190 may control an overall operation of the wireless power transmission apparatus 10. That is, the controller 190 may control each component included in the wireless power transmission apparatus 10. The resonance capacitor 160 may be a component that functions as a buffer. The resonance capacitor 160 may adjust a saturation voltage increase rate while the switching device is turned off and may affect energy loss during a turn-off time. The resonance capacitor 160 may include a plurality of capacitors 160a and 160b that are connected in series to each other between the working coil 12 (150) and the DC opposite ends to which a voltage from the rectifier 120 is output. The resonance capacitor 160 may include a first resonance capacitor 160a and a second resonance capacitor 160b. In detail, one end of the first resonance capacitor 160a may be connected to one end to which a voltage from the rectifier 120 is output, and the other end may be connected to a node of the working coil 12 (150) and the second resonance capacitor 160b. Similarly, one end of the second resonance capacitor 160b may be connected to the other end to which a low voltage is output from the rectifier 120, and the other end may be connected to a node of the working coil 12 (150) and the first resonance capacitor 160a.

Capacitance of the first resonance capacitor 160a may be the same as capacitance of the second resonance capacitor 160b.

Depending on capacitance of the resonance capacitor 160, a resonance frequency of the wireless power transmission apparatus 10 may be determined.

In detail, the resonance frequency of the wireless power transmission apparatus 10 configured as the circuit diagram shown in FIG. 3 may be determined depending on inductance of the working coil 12 (150) and capacitance of the resonance capacitor 160. A resonance curve may be formed based on the resonance frequency determined depending on the inductance of the working coil 12 (150) and the capacitance of the resonance capacitor 160. The resonance curve may represent output power depending on a frequency.

A quality (Q) factor may be determined depending on an inductance value of the working coil 12(150) included in the multi-functional wireless power transmission device 10 and a capacitance value of the resonance capacitor 160. The resonance curve may be differently formed depending on the Q factor. A frequency at which maximum power is output may be referred to as a resonance frequency (f0), and the wireless power transmission apparatus may use a frequency of a right region based on the resonance frequency (f0) of the resonance curve. Thus, the wireless power transmission apparatus 10 may reduce a frequency to lower a firepower stage and may increase the frequency to increase the firepower stage. The wireless power transmission apparatus 10 may adjust such a frequency and may adjust output power. The wireless power transmission apparatus 10 may use a frequency corresponding to a range to a second frequency from a first frequency. That is, the wireless power transmission apparatus may change a current frequency to any one frequency included in the range to the second frequency from the first frequency and may adjust firepower. The first frequency as a minimum frequency and the second frequency as a maximum frequency that are to be controlled by the wireless power transmission apparatus 10 may be preset. For example, the first frequency may be 20 kHz and the second frequency may be 75 kHz.

As the first frequency is set as 20 kHz, the wireless power transmission apparatus 10 may prevent the case in which an audible frequency (about 16 Hz to 20 kHz) is used. Thus, noise of the wireless power transmission apparatus 10 may be reduced. The second frequency may be set to an IGBT maximum switching frequency. The IGBT maximum switching frequency may refer to a maximum frequency for driving in consideration of internal pressure, capacitance, and the like of the IGBT switching device. For example, the IGBT maximum switching frequency may be 75 kHz.

For this reason, a frequency that is generally used to heat a cooking took by induction heating in the wireless power transmission apparatus 10 may be included in about 20 kHz to 75 kHz.

A frequency used in wireless power transfer (WPT) may be different from a frequency used for induction heating the cooking container by the wireless power transmission apparatus 10. In particular, the frequency used in wireless power transfer (WPT) may be a frequency with a higher band than the used to heat a cooking container by the wireless power transmission apparatus.

Thus, the wireless power transmission apparatus according to the present invention may provide both a cooking tool heating function and a wireless power transfer (WPT) function through the same working coil 12 (150) by adjusting a resonance frequency.

FIG. 4 is an example of a circuit diagram of the case in which a wireless power transmission apparatus is operated in a wireless power transmission mode according to an embodiment of the present invention.

FIG. 4 shows an example of the wireless power transmission apparatus 10 that selectively provides a cooking container induction heating mode and a wireless power transmission mode according to an embodiment of the present invention.

The wireless power transmission apparatus 10 according to an embodiment of the present invention may include the rectifier 120, the DC link capacitor 130, the inverter 140, the working coil 12 (150), the resonance capacitors 160a and 160b, WPT capacitors 170a and 170b, and mode conversion switches 180a and 180b.

The same description as the description given with reference to FIG. 3 is omitted here.

The working coil 12 (150) may generate a magnetic field as current flows therein. The magnetic field generated in the working coil 12 (150) may heat the target object 1 of a secondary side as being transmitted through the cooking container of the secondary side.

The magnetic field generated by the working coil 12 (150) may transmit power to a small home appliance of the secondary side as being transmitted through the small home appliance of the secondary side.

The resonance capacitors 160a and 160b may be the same as in the description given with reference to FIG. 3. That is, the resonance capacitors 160a and 160b shown in FIG. 4 may be the same as the resonance capacitor included in the wireless power transmission apparatus 10 as described above with reference to FIG. 3.

As the wireless power transmission apparatus 10 is operated in a wireless power transmission mode or a cooking container induction heating mode, the resonance capacitors 160a and 160b may or may not be connected in parallel to the WPT capacitors 170a and 170b.

The WPT capacitors 170a and 170b may be connected in parallel to the resonance capacitors 160a and 160b. The WPT capacitors 170a and 170b may be a component for lowering a resonance frequency of the wireless power transfer (WPT) to operate an electromagnetic induction heating cooking device 100 in the wireless power transmission mode. In detail, when the wireless power transmission apparatus 10 is operated in the cooking container induction heating mode, the WPT capacitors 170a and 170b may not be connected to the resonance capacitors 160a and 160b. In contrast, when the wireless power transmission apparatus 10 is operated in the wireless power transmission mode, the WPT capacitors 170a and 170b may be connected in parallel to the resonance capacitors 160a and 160b. When the WPT capacitors 170a and 170b are connected in parallel to the resonance capacitors 160a and 160b, composite capacitance may increase. When the composite capacitance increases, the resonance frequency (f0) may be reduced according to Equation 1 below.

That is, when the electromagnetic induction heating cooking device 100 is operated in the wireless power transmission mode, the resonance frequency (f0) may be reduced. As such, the wireless power transmission apparatus 10 may reduce the resonance frequency (f0) and may wirelessly transmit power to a product of a secondary side using the original inverter 140 and working coil 12 (150).

The WPT capacitors 170a and 170b may include the first WPT capacitor 170a and the second WPT capacitor 170b. The first WPT capacitor 170a may be connected in parallel to the first resonance capacitor 160a, and the second WPT capacitor 170b may be connected in parallel to the second resonance capacitor 160b.

Capacitance of the first WPT capacitor 170a may be the same as capacitance of the second WPT capacitor 170b.

The mode conversion switches 180a and 180b may determine whether the WPT capacitors 170a and 170b and the resonance capacitors 160a and 160b are connected in parallel to each other. That is, the mode conversion switches 180a and 180b may perform control to connect or not connect the WPT capacitors 170a and 170b in parallel to the resonance capacitors 160a and 160b.

In detail, when the mode conversion switches 180a and 180b are turned on, a circuit may be shorted, and the WPT capacitors 170a and 170b and the resonance capacitors 160a and 160b may be connected in parallel to each other. Thus, as described above, the resonance frequency (f0) may be reduced.

In contrast, when the mode conversion switches 180a and 180b are turned off, the circuit may be open, and the WPT capacitors 170a and 170b may not be connected to the resonance capacitors 160a and 160b. Thus, the resonance frequency (f0) may not be changed.

The mode conversion switches 180a and 180b may include the first mode conversion switch 180a and the second mode conversion switch 180b, and the first mode conversion switch 180a and the second mode conversion switch 180b may be simultaneously operated. The first mode conversion switch 180a may determine whether the first WPT capacitor 170a and the first resonance capacitor 160a are connected in parallel to each other, and the second mode conversion switch 180b may determine whether the second WPT capacitor 170b and the second resonance capacitor 160b are connected in parallel to each other.

According to the present invention, as described above, the mode conversion switches 180a and 180b may be controlled depending on an operation mode, and may be operated in the wireless power transmission mode or the induction heating mode through the same working coil 12 (150).

That is, one mode of the two modes may be selectively operated through a user input unit according to user selection.

The wireless power transmission apparatus 10 may further include the controller 190 for controlling on and off of the conversion switches 180a and 180b depending on such mode selection, controlling on and off a switching device of the inverter 140, and controlling an overall operation of a driving module.

When the induction heating mode is selected using a user input unit, the controller 190 of the wireless power transmission apparatus 10 may be operated in the induction heating mode, and the conversion switches 180a and 180b may be turned off to perform induction heating.

When the wireless power transmission mode of the target object 1 is selected using the user input unit, the wireless power transmission apparatus 10 may be operated in the wireless power transmission mode, the conversion switches 180a and 180b may be turned on, and wireless power transfer (WPT) may be performed at a resonance frequency based on composite capacitance.

In this case, the wireless power transmission apparatus 10 needs to perform whether the target object 1 positioned on the upper glass 11 is capable of wirelessly transmitting power.

Even if a user selects the wireless power transmission mode through the user input unit, when the target object 1 positioned on the wireless power transmission apparatus is an electronic product that is not capable of performing wireless power transfer (WPT) or a small home appliance having no reception coil but not a small home appliance having a reception coil, the wireless power transmission apparatus 10 may differently perform the operation.

When the operation is performed based on only mode selection information received through the user input unit, overcurrent may flow in the target object 1 having no reception coil, or in the case of a foreign object, a waste of electricity may also be caused due to overcurrent and high heat may be accompanied, and thus, the apparatus may be damaged.

Thus, even if selection information of the wireless power transmission mode is received through the user input unit, a procedure of determining whether the target object 1 is for executing the corresponding mode may be required.

Hereinafter, the procedure of determining the target object 1 in a wireless power transmission mode will be described in detail.

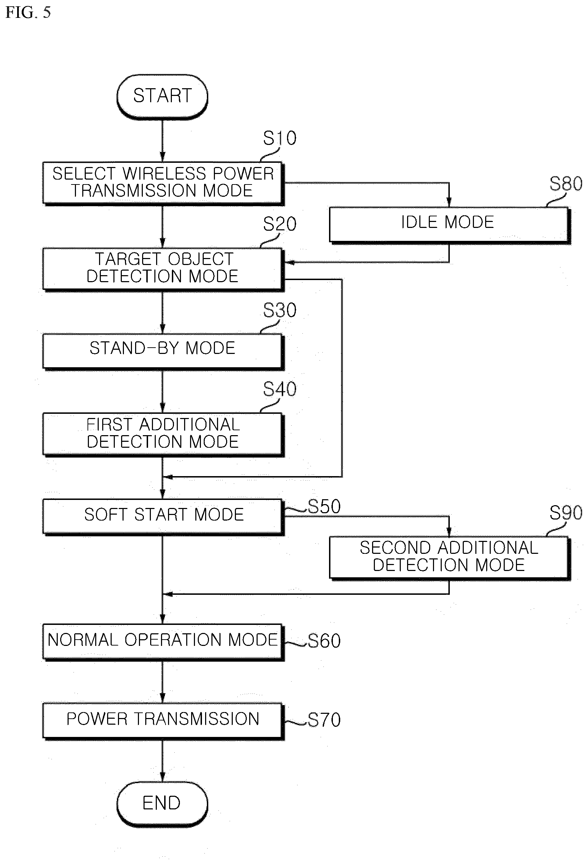

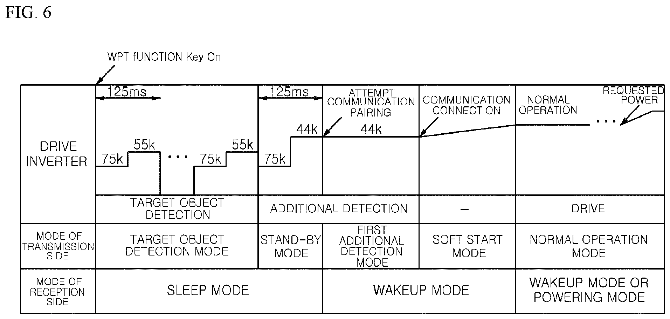

FIG. 5 is a schematic flowchart of a mode of a wireless power transmission apparatus for induction heating according to an embodiment of the present invention. FIG. 6 is a diagram showing a structure of a transmission apparatus and a reception apparatus with respect to the flowchart of FIG. 5.

Referring to FIGs. 5 and 6, when the controller 190 receives selection information corresponding to selection of an icon or a button of a wireless power transmission mode by selecting the icon or the button from a user input unit, the wireless power transmission apparatus for induction heating according to the present invention may be converted into the wireless power transmission mode and may perform an operation.

The wireless power transmission apparatus 10 for induction heating may have a preparation period through a plurality of operations to a normal operation mode S60, that is, an operation of wirelessly emitting power towards the reception target object 1.

The wireless power transmission apparatus 10 for induction heating may perform detection for identifying the target object 1 positioned on the upper glass 11 in the preparation period prior to the normal operation mode.

That is, the target object 1 may be identified, for example, whether the target object 1 is a small home appliance having a reception coil, is a small home appliance that is directly heated without a reception coil and has only a pick up coil, is a general heating container, is a foreign object, or is in a no-load state in which there is nothing.

Identification of the target object 1 may be sequentially performed while performing preparation to the normal operation mode S60 in a preparation rather than being simultaneously performed in a single operation.

In detail, when receiving mode selection information (S10), the wireless power transmission apparatus 10 may enter an eccentricity detection mode S20, also referred to as target object detection mode, in terms of a transmission side.

The wireless power transmission apparatus 10 defined as the transmission side may execute a foreign object detection mode S40, also referred to as first additional detection mode, and a soft start mode S50 through the eccentricity detection mode S20 and a stand-by mode S30.

In the soft start mode S50, prior to entry into the normal operation mode S60, detection of all the target objects 1 may be terminated and corresponding power may be wirelessly transmitted (S70).

The eccentricity detection mode S20 may be simultaneously executed when a user pushes a wireless power transmission mode icon or button of a user input unit, and the controller 190 may oscillate frequencies for determining whether the target object 1 is positioned on the upper glass 11 and predicting an alignment state.

In this case, a switching device of the inverter 140 may be alternately turned on and off to allow current to flow according to the oscillation frequency. Whether the target object 1 identified in the eccentricity detection mode S20 is a general heating container may be determined whether the target device 1 is a heating container may be determined while switching to a first operation frequency from a start frequency.

In the eccentricity detection mode S20, whether the target object 1 is present and whether the target object 1 has a coil may be determined, and when the coil is present, whether the reception coil 15 and the working coil 12 of the target object 1 are aligned with each other, that is, whether coils are positioned in concentricity or eccentricity may be additionally determined.

In the eccentricity detection mode S20, the wireless power transmission apparatus 10 may attempt wireless communication with the target object 1, but in reality, reception through wireless communication may be started by communication pairing when power of a small home appliance that is the target object 1 is supplied in the foreign object detection mode.

An idle mode may be defined as a start mode in which the controller 190 is activated by supplying power to a driving module including the controller 190 of the wireless power transmission apparatus 10 for induction heating when a user pushes and turns on a power button through a user input unit.

In the idle mode, wired communication between the user input unit and the driving module is performed, but the controller 190 may not substantially begin to be driven.

The stand-by mode S30 may be an operation after the eccentricity detection mode S20, and may be defined as a frequency change period in which the inverter 140 is driven at a second operation frequency in order to determine a foreign object when the target object 1 is present in a region for wireless power transfer.

In this case, in the stand-by mode S30, frequency sweep may occur from an initial operation frequency to a second operation frequency, and when the second operation frequency is reached, a current mode may substantially enter the foreign object detection mode S40.

In this case, the second operation frequency may not oscillate from the beginning because oscillation needs to be sequentially induced since driving noise is generated when the apparatus is driven at the second operation frequency, that is, a lower frequency than the initial operation frequency in a state in which a voltage of a DC link is charged.

Then, the foreign object detection mode S40 may be defined as a period in which induced voltage information of the target object is received and whether a foreign object is present in a state in which the apparatus is driven at the second operation frequency and communication pairing with a reception side, that is, the target object 1 is performed.

In this case, when the foreign object is determined to be present, the apparatus may enter the idle mode again and information indicating that the foreign object is present may be signaled to a user, and when there is no foreign object, the apparatus may enter the soft start mode S50.

That is, a state that is activated by injecting power into the reception side, that is, the target object 1 due to induced current from the foreign object detection mode S40 may be defined as a wakeup mode, and in this case, wireless communication is paired between the reception side and the transmission side and communication may begin therebetween.

The soft start mode S50 may be defined as a period in which power of a level requested by the target object 1 is changed to a frequency corresponding to corresponding power for an operation in the wireless power transmission apparatus 10.

When the power of the level requested by the target object 1 is approximately reached in the soft start mode S50, a current mode may enter the normal operation mode S60.

In the soft start mode S50, an additional detection mode S90 may be also executed.

The additional detection mode may be defined as a period in which additional detection is performed for recheck prior to power transfer of a small home appliance.

That is, in the additional detection mode, a mode that is actually selected by a user may be rechecked, and whether there is an error of judgment between no load and a small home appliance may be rechecked.

The normal operation mode S60 may be defined as a period in which change in requested output is monitored and whether there is a difference between actual output and the requested output is determined with a constant level at power of the level requested by the target object 1.

In this case, when there is the difference between the actual output and the requested output, if the actual output is lower than the requested output, a power up mode may proceed to lower an operation frequency and to increase output, and if the actual output is higher than the requested output, a power down mode may proceed to increase the operation frequency and to lower the output.

At a side of the target object 1, according to user operation selection and operation time of the target object 1 or according to request for low power or high power, the controller 190 may perform an operation using requested output based on the request.

Prior to the normal operation mode while the aforementioned modes are sequentially or inversely performed, the state of the target object 1 may be preferentially determined in the preparation period.

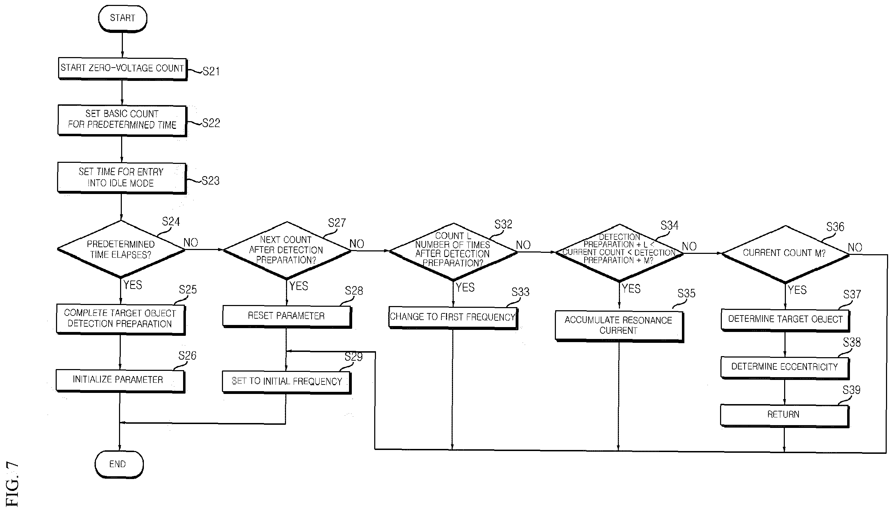

Hereinafter, a target object detection mode will be described in detail with reference to FIGs. 7 to 13.

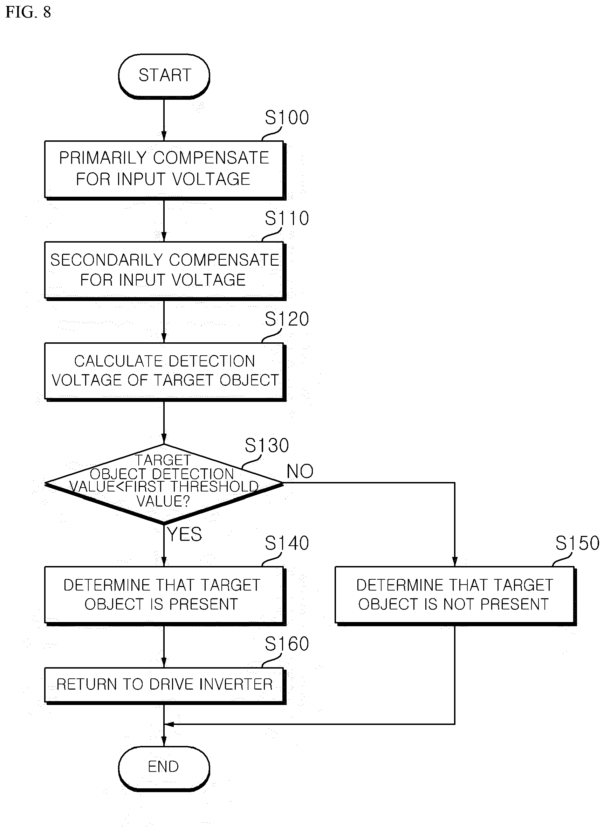

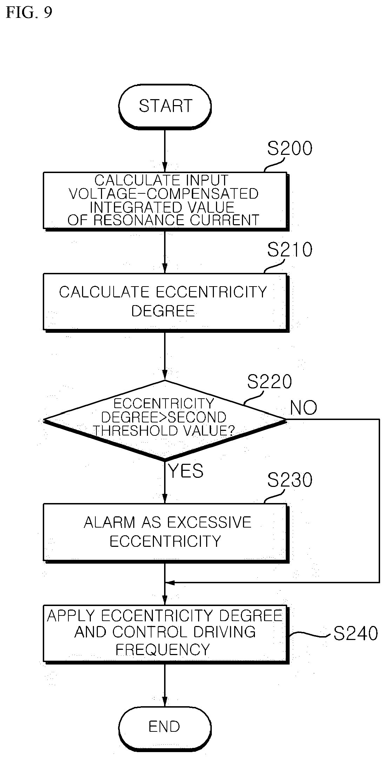

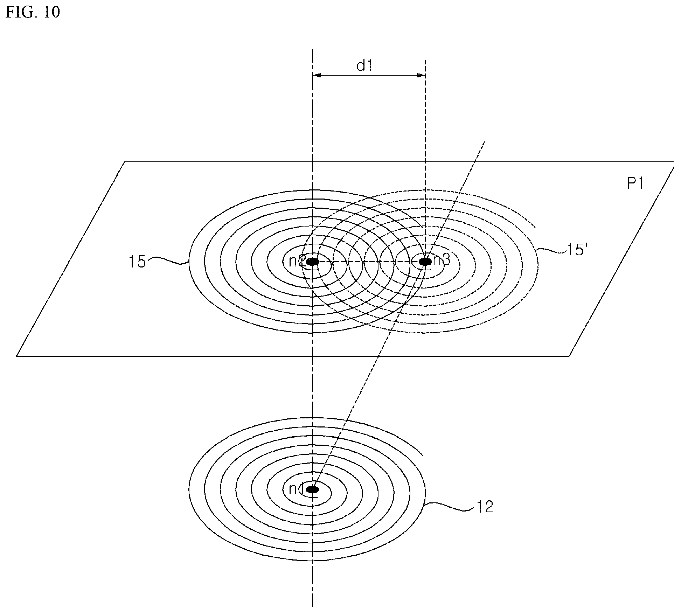

FIG. 7 is a schematic flowchart in a wireless power transmission mode of a wireless power transmission apparatus for induction heating according to an embodiment of the present invention. FIG. 8 is a flowchart of determination of a target object of FIG. 7. FIG. 9 is a flowchart of determination of an eccentricity degree of FIG. 7. FIG. 10 is a state diagram showing an alignment state between a reception coil and a working coil.

Referring to FIG. 7, the wireless power transmission apparatus 10 for induction heating according to an embodiment of the present invention may change a frequency to a first operation frequency from a start frequency in an eccentricity detection mode, and may classify the target device 1 at a first operation frequency into a general heating container, and a small home appliance having no reception coil.

In the case of a small home appliance having a reception coil, the target device 1 may also be classified into a foreign object, and no load (which means that no object is positioned on the upper glass 11), and a method of classifying this and will be described below.

The start frequency may be a set basic frequency and may be, for example, about 75 kHz.

First, as shown in FIG. 7, zero-voltage count may be started with respect to a switching signal provided to a switching device of the inverter 140 (S21).

In this case, the zero-voltage count is defined as performing detection at a time at which a rectified reference voltage applied at 120 Hz is 0 V after commercially available power that is reference power of the wireless power transmission apparatus 10 for induction heating is full-wave rectified with respect to a reference voltage of 60 Hz.

As such, detection or count may be performed when the reference voltage is 0, and thus, an output value for minimizing influence of an input reference voltage may be calculated.

According to the present invention, the input reference voltage is commercially available power, and thus, a description will be given based on 120 Hz that is a frequency of the rectified voltage, but the present invention is not limited thereto, and it would be understood that detection or count is performed when the reference voltage is 0.

According to an embodiment of the present invention, count may be configured to be performed at 120 Hz, that is, every 8.33 ms, but the present invention is not limited thereto.

When the eccentricity detection mode begins, the controller 190 may perform zero-voltage count to find an accurate zero-voltage time from a start time of the eccentricity detection mode, that is, a time point of receiving a mode selection signal from a user input unit.

Then, the controller 190 may start zero-voltage count for a predetermined time and may enhance the accuracy of zero-voltage count to reduce error (S22). In this case, the predetermined time may be at least one second and may be set to a time that is not greater than 3 seconds.

When there is no counted value for a reference time, the controller 190 may set a reference time of entry into an idle mode (S23).

The reference time may be set to 3 seconds as a maximum value for the predetermined time.

Then, the controller 190 may perform count of reading input current at each zero-voltage time.

In this case, the input current refers to current supplied to a reception coil, that is the working coil 12 (hereinafter, 150), and whether the target object 1 has the reception coil 15 or whether eccentricity occurs may be determined by reading corresponding input current and integrating the input current in predetermined counts.

First, when zero-voltage count is performed, all counts are performed for a predetermined time, for example, 1 second, and 1 second elapses (S24), eccentricity detection preparation may be determined to be completed (S25) and all parameters may be initialized (S26). In this case, the parameter may be reset and initialized, for example, blank processing of a timer and flag value.

As such, when a predetermined time elapses, preparation may be determined to be completed and a next count may be performed.

The controller 190 may perform zero-voltage count in a next period when a predetermined time elapses, that is, may perform count at 1 second + 8.33 ms (S27).

In this case, each parameter may be reset (S28), and a frequency of a switching signal applied to the inverter 140 may be set to an initial frequency and a switching device of the inverter 140 may be driven (S29).

For example, when the initial frequency is 75 kHz, the frequency of the switching signal may be set to 75 kHz. In this case, only count may be performed and detection of input current may not be performed in zero-voltage count.

When a switching device of the inverter 140 begins to be driven at an initial frequency, such driving at the initial frequency may be continuously performed for a predetermined time.

The predetermined time may be arbitrarily set but the driving at the initial frequency may be maintained up to change to a next operation frequency. For example, the switching device of the inverter 140 may be driven at the initial frequency until a first count is performed after 1 second that is a detection preparation time.

A capacitor 130 may be charged while only zero-voltage count is performed without detection of input current.

Then, when a first count is performed after 1 second that is a detection preparation time through zero-voltage count (S32), the controller 190 may change a switching signal of the inverter 140 to satisfy the first operation frequency and may drive the inverter 140 at the first operation frequency (S33).

In this case, the first operation frequency may be used to determine whether eccentricity occurs and whether the target object 1 has the reception coil 15, may be a threshold frequency at which overcurrent is not exerted, and may be, for example, 55 kHz, but the present invention is not limited thereto.

However, the first operation frequency is a lower frequency than the initial frequency, and may be a higher frequency than a second operation frequency at which wireless power transfer is performed.

Then, when a frequency of the inverter 140 is changed to the first operation frequency, the controller 190 may read resonance current in each count until a current count is between a first count after 1 second that is an initial preparation time and $m^{th}$ count after 1 second that is an initial preparation time (S34). Resonance current may be defined as current flowing in the working coil 12 according to the switching signal of the inverter 140.

In this case, the controller 190 may integrate resonance current read in respective counts (S35).

That is, the integrated resonance current may be resonance current corresponding to $(m-l)^{th}$.

For example, when $l^{th}$ satisfies $8^{th}$ and $m^{th}$ satisfies $15^{th}$, the controller 190 may read resonance current flowing in the working coil 12 to a $14^{th}$ count from a $9^{th}$ count and may perform integration thereon.

Then, when a current count is an $m^{th}$ count after 1 second that is an eccentricity detection preparation, the controller 190 may terminate count (S36), may re-change a frequency of the inverter 140 to an initial frequency, and may perform primary determination on the target device 1 based on the integrated value (S37).

When the target object 1 is determined to have the reception coil 15, an alignment state between the reception coil 15 of the target object 1 and the working coil 12 may be determined (S38).

The eccentricity detection mode may include an $m^{th}$ count, and when m is 15, about 125 ms may be taken, but the present invention is not limited thereto.

The eccentricity detection mode may be repeatedly performed over a plurality of number of times, but a number of times and a time may not be specified.

The controller 190 may determine the target object 1 and eccentricity based on resonance current values integrated up to an $m^{th}$ count, and such determination will be described with reference to FIGs. 8 and 9.

First, with reference to FIG. 8, determination of the target object 1 will be described.

Referring to FIG. 8, when an $m^{th}$ count is performed, the controller 190 may receive an integrated value of resonance current detected a plurality of number of times, that is, (m-l) number of times as a primary determination result (S100).

In this case, the primary determination result may be received, this may be compensated for, and whether the target object is a small home appliance including a reception coil, or an object having no reception coil.

The object having no reception coil may be a small home appliance having no reception coil, no-load, or a heating container.

In this case, an integrate value of resonance current of (m-l) number of times as a base value of determination of a target object will be referred to as an integrated value of resonance current.

The controller 190 may determine any one group to which the target device 1 belongs among the three groups based on the integrated value of resonance current.

In this case, the controller 190 may appropriately compensate for the integrated value of resonance current and may calculate the compensated integrated value of resonance current, thereby enhancing the accuracy of determination.

In this case, a predetermined difference in an integrated value of resonance current may be generated depending on an input voltage value of supplied commercially available power, that is, reference power, and in order to compensate for this, a compensated value of resonance input current may be calculated by applying the following compensation equation (S101).

[Equation 1]

Compensated integrated value of resonance current = reference value + integrated value of resonance current – first input voltage compensated value – second input voltage compensated value

The compensation equation is selected based on data in a no-load state when input voltage is 253 V, and here, the reference value is a predetermined integer.

For example, the reference value may be 519, but the present invention is not limited thereto.

The compensation equation may be derived from Table 1 below but the present invention is not limited thereto.

[Table 1]

| Input Voltage | | V187 | | V220 | | V253 | |
|---|---|---|---|---|---|---|---|
| Parameter | | I_input | I_55k | I_input | I_55k | I-input | I_55k |
| WPT | None | 359 | 407 | 366. | 427 | 376 | 454 |
| All-Clad | 8 inches | 750 | 444 | 858 | 464 | 970 | 437 |
| Minimum heating container(145mm | | 68 3 | 401 | 732 | 420 | 888 | 445 |
| Test piece (Iron Bar) | | 362 | 358 | 374 | 363 | 387 | 375 |
| Rice cooker wirh RX_Side Coil | 8T/ Constancy | 469 | 453 | 513 | 457 | 555 | 476 |
| | 8T/eccentri city | 431 | 405 | 466 | 418 | 502 | 434 |
| | 11T/ Constancy | 430 | 417 | 465 | 4-30 | 500 | 450 |
| | I1T/eccentri city | 408 | 395 | 437 | 406 | 468 | 421 |
| | 14T/ Constancy | 408 | 406 | 437 | 418 | 466 | 434 |
| | 14T/eccentri city | 392 | 387 | 416 | 400 | 442 | 411 |
| Electric kettle | Constancy | 438 | 363 | 480 | 373 | 522 | 384 |
| | eccentri city | 415 | 351 | 445 | 357 | 479 | 363 |
| Wireless Toaster | Constancy | 355 | 305 | 361 | 304 | 368 | 308 |
| | eccentri city | 362 | 400 | 370 | 417 | 380 | 442 |
| Wirless Blender | Constancy | 355 | 320 | 362 | 321 | 369 | 329 |
| | eccentri city | 360 | 387 | 368 | 404 | 377 | 424 |

As shown in Table 1 above, integrated values of input current of (m-l) number of times depending on input voltage on a plurality of small home appliances are shown in I_input, and I_55k shows the sum of resonance current at a first operation frequency of 55 kHz.

In this case, this shows the sum of resonance current and the sum of input current in the case of eccentricity and concentricity with respect to each small home appliance, WPT indicates a no-load state, and a test piece has no foreign object.

In this case, when the input voltage is not 253 V, for example, when the input voltage is 287 V or 220 V, the corresponding compensation equation may be applied, the target devices 1 may be compared, and whether eccentricity occurs may be determined, and when input voltage is smaller than 253 V, the variation in the integrated values of resonance current may also be increased to clearly identify the target device 1 and an eccentricity degree.

In this case, the first input voltage compensated value may be calculated according to Equation 2 below.

[Equation 2]

First input voltage compensated value=2*input voltage (RMS)

Then, a second input voltage compensated value may be calculated according to Equation 3 below (S110).

[Equation 3]

$$\text{Second input voltage compensated value} = p * \text{input voltage (RMS)}/2^k$$

In this case, p and k may be positive integers, p may be 290, and k may be 10. Then, when the first and second input voltage compensated values are calculated, an integrated value of compensated resonance current may be calculated by applying the calculated values to Equation 1 above (S120). The detection voltage as referred to in S120 in Fig. 8 may refer to the detected input voltage.

The integrated value of compensated resonance current may be a target object detection value and may be defined as a value calculated according to Equation 1 above.

In this case, the target object detection value may represent a degree by which the reference value, that is, a value of 519 is lowered when an input voltage of commercially available power is greater or smaller than 253 V.

Thus, the reference value may be required not to be a negative value due to the input voltage and may be 519.

Whether a target object is present may be determined based on the calculated integrated value of compensated resonance current, that is, the target object detection value (S130).

In detail, as shown in FIG. 8, whether the target object detection value is smaller than a first threshold value may be determined.

When the target object detection value is smaller than the first threshold value, the target object may be determined to be a small home appliance having the reception coil 15 (S140).

That is, when the reception coil of the target object is present, inductance may be formed to reduce a value of resonance current, and thus, a first threshold value thereof may be set and whether the target object is the small home appliance having the reception coil 15 may be determined based on the set first threshold value.

When the target object detection value is not the first threshold value, i.e. the target object detection value may be bigger than the first threshold value (as shown in Fig. 8), the target object may be determined to an object having no reception coil 15, for example, a small home appliance having no reception coil, no-load, a foreign object, or a general heating container (S150). In this case, entry into the idle mode may be guided.

When identification of the target object is terminated, a frequency for driving the inverter 140 may be adjusted again, and then, next determination may be performed, that is, whether eccentricity occurs may be determined (S160).

In this case, when the target object 1 is determined to be a small home appliance having the reception coil 15, an alignment state between the reception coil 15 and the working coil 12 may be determined.

Such determination of the alignment state between the reception coil 15 and the working coil 12 will be described with reference to FIGs. 9 and 10.

First, determination of whether the reception coil 15 and the working coil 12 are aligned with each other will be described with reference to FIG. 10, in this regard, as schematically shown in FIG. 10, assuming that the central points n1 and n2 of the respective coils, that is, the central point n2 of the reception coil 15 and the central point n1 of the working coil 12 are positioned on the single plane, an eccentricity amount d1 may be defined as a straight distance between the two central points

According to an embodiment of the present invention, for wireless power transfer of a small home appliance having the reception coil 15, for example, a blender or an oven toaster, the reception coil 15 needs to be aligned with the working coil 12 at a short distance that satisfies a predetermined distance.

Alignment may be defined as concentricity, that is, a state in which the two central points n1 and n2 are homocentric on the single plane assuming that the two coils 12 and 15 are positioned on the single plane p1, that is, a state in which the central point n2 of the reception coil 15 and the central point n1 of the working coil 12 are homocentric on an axis perpendicular to an imaginary single plane p1

Eccentricity corresponds to the case in which central points n1 and n3 of the two coils 12 and 15 are not homocentric on the axis perpendicular to the imaginary single plane p1, and as shown in FIG. 10, a distance d1 between the two central points n1 and n3 on the imaginary single plane p1 may be defined as an eccentricity degree.

Thus, the eccentricity degree may be defined as the straight distance d1 on the imaginary single plane and may not be a diagonal distance on difference planes.

In this case, in order to smoothly perform wireless power transfer between the two coils 12 and 15, the eccentricity degree needs to be a predetermined range or less, and as the eccentricity degree is increased, transmission efficiency of wireless power transfer may be lowered.

Thus, the present invention proposes a method of determining an eccentricity degree, compensating for this, and wirelessly transmitting power prior to wireless power transfer.

To this end, referring to FIG. 9, in the integrated value of resonance current, in which the input voltage calculated in identification of the target object is compensated for, may be read (S200).

Such the integrated value of compensated resonance current may be used by reading a value in Equation 1 above.

Then, the eccentricity degree may be calculated using the integrated value of compensated resonance current according to Equation 4 below (S210).

[Equation 4]

$$\text{Eccentricity degree} = A * \text{Ires\_sum\_comp}/2^B - \text{Ires\_sum\_comp} * \text{Ires\_sum\_comp}/2^C - \text{Ires\_sum\_comp} * \text{Ires\_sum\_comp}/2^D - E$$

In this case, A, B, C, D, and E may be a positive integer, A may be 876, and B and C may be the same value, for example, 9. D may be an integer greater than B and C and may be 10, and E may be for adjusting a value, and may be, for example, 306.

Such Equation 4 is an equation for deriving a second-order linear regression equation based on the result of Table 2 below, and a test in terms of eccentricity is performed only in the case in which eccentricity degrees are 0, 10, 15, 20, and 25, respectively, but it is assumed that linear continuity between data is present.

[Table 2]

| Alignment state of reception coil | Resonance current_55 kHz operation frequency | Predicted eccentricity(mm) |
|---|---|---|
| Concentricity (0mm) | 276 | 1 |
| | 276 | 1 |
| | 276 | 1 |
| | 276 | 1 |
| Eccentricity (10mm) | 293 | 10 |
| | 294 | 9 |
| | 294 | 9 |
| | 294 | 9 |
| Eccentricity (15mm) | 312 | 16 |
| | 312 | 16 |
| | 312 | 16 |
| | 312 | 16 |
| Eccentricity (20mm) | 330 | 22 |
| | 330 | 22 |
| | 330 | 22 |
| | 330 | 22 |
| Eccentricity (25mm) | 348 | 26 |
| | 348 | 26 |
| | 348 | 26 |
| | 348 | 26 |

As such, when the calculated eccentricity degree is greater than a second threshold value, excessive eccentricity may be determined to occur (S220).

For example, the second threshold value for determining excessive eccentricity may be assumed to be 27 mm, and in the case of a distance equal to or greater than 27 mm, the controller 190 may guide arrangement through a user alarm (S230).

When the eccentricity degree is equal to or less than the second threshold value, the eccentricity degree may be applied to control an operation frequency and to control transmission power (S240).

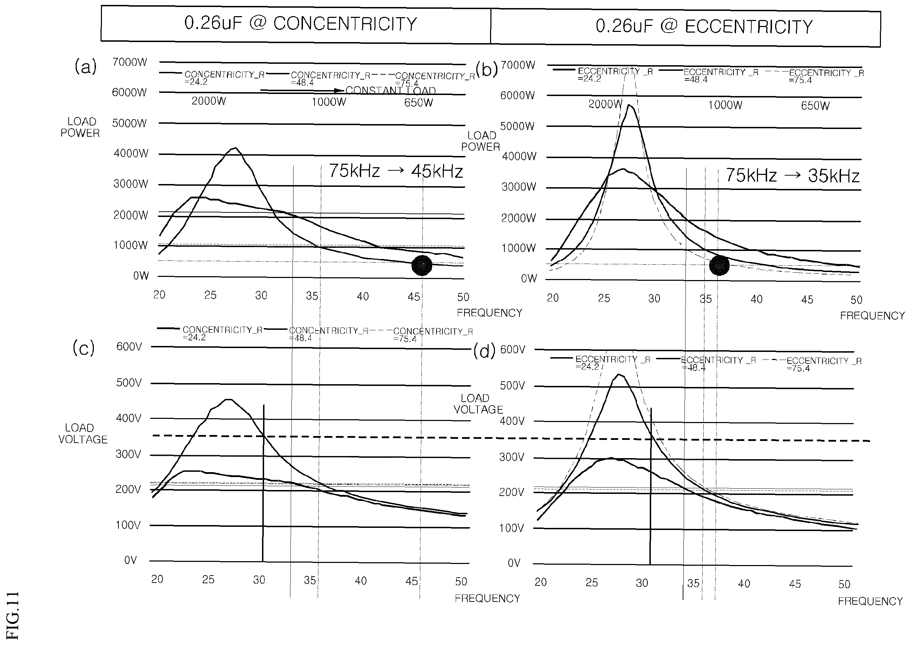

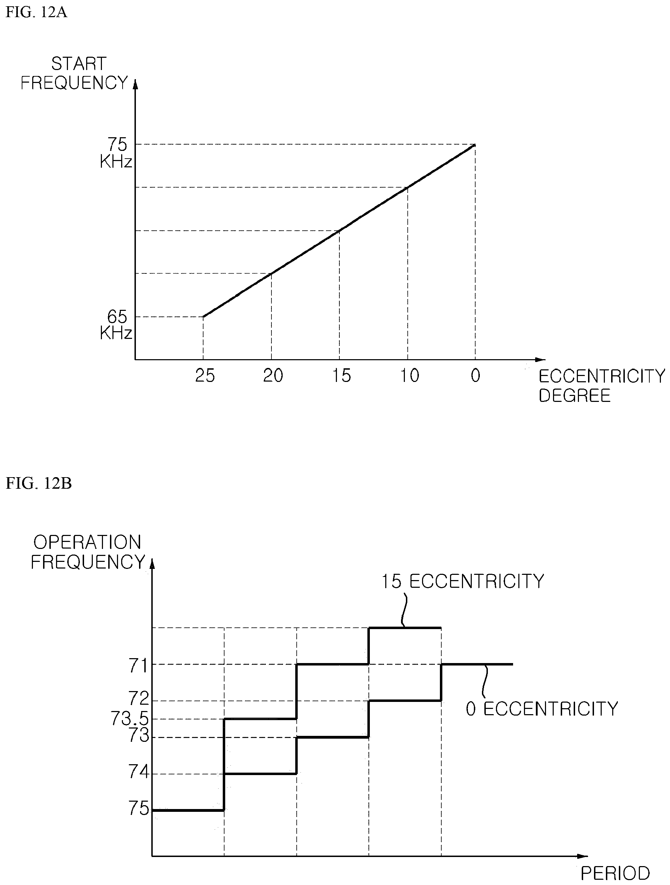

Hereinafter, a method of controlling transmission power will be described with reference to FIGs. 11 and 12.

FIG. 11 shows a load output and load voltage depending on concentricity and eccentricity in various test pieces.

A left graph shows an operation frequency in concentricity depending on a diameter of a test piece, and a right graph shows an operation frequency in eccentricity depending on a diameter of a test piece.

Although there may be a slight difference in a resonance frequency depending on a diameter of each test piece, when eccentricity occurs, an operation frequency for achieving generally desired output power at eccentricity may be reduced. That is, as eccentricity becomes serious, a coupling factor among wireless power transmission parameters may be reduced, thereby reducing power transmission efficiency. Thus, power transmitted during an operation at the same operation frequency may be highly reduced. Thus, a long time may be taken to achieve desired output power.

Thus, when power is wirelessly transmitted to a wireless small home appliance that needs a rapid response, it may not be possible to embody desired performance using such a long response.

According to the present invention, an eccentricity degree may be calculated, and thus, in order to compensate for such output power based on the calculated degree, the apparatus may be controlled to vary an operation frequency and to transmit power.

For example, as shown in FIG. 12A, the start frequency may be varied and set until an operation frequency for wireless power transfer depending on an eccentricity degree is reached.

In detail, an operation frequency required to transmit the same requested power may be changed depending on an eccentricity degree as shown in FIG. 11, and as the eccentricity degree is increased, a final operation frequency may be lowered, and thus, when the start frequency is the same, a long time may be taken up to a final operation frequency.

Thus, the start frequency may be varied and set depending on the eccentricity degree, and for example, as shown in FIG. 12A, when the eccentricity degree is 0, the start frequency may be set to 75 kHz, and when the eccentricity degree is 25 mm, the start frequency may be set to 65 kHz.

Such a relationship between the eccentricity degree and the start frequency may be set and stored with respect to each eccentricity degree in the look-up table, and may be stored as a functional relation as shown in FIG. 12A.

Thus, as an eccentricity degree is increased, a start frequency is lowered, and thus, a time taken to enter the last lowest operation frequency may be reduced.

The controller 190 may set the start frequency to be the same and may set the swept frequency interval to be different depending on the eccentricity degree as shown in FIG. 12B.

For example, when eccentricity is 0, an operation frequency may enter the final operation frequency via sweep by 1 kHz, and when eccentricity is 15, the operation frequency may enter the final operation frequency via speed by 1.5 kHz, and thus, as eccentricity is increased, the swept frequency interval may be increased, and accordingly, the apparatus may be controlled to enter the last lowered operation frequency within a short time. That is, the operation frequency may be incrementally increased from the start frequency to the final operation frequency based on the swept frequency interval, wherein the swept frequency interval may increase as the eccentricity is increased for efficiently arriving at the final operation frequency within a short time period. The swept frequency interval may also be referred to as incremental frequency increase.

As such, the eccentricity degree may be calculated, and thus, a start frequency or a frequency interval may be controlled during wireless power transfer to effectively enter a final operation frequency within a short time.

Thus, the present invention may provide a wireless power transmission apparatus for transmitting power within a short time by ensuring power transmission efficiency even if eccentricity occurs by a predetermined degree.

As described above, in an eccentricity detection mode executed in a preparation period prior to a normal mode, whether a target object is present and whether eccentricity occurs may be clearly determined via comparison in the compensated integrated value of resonance current.

When determination up to FIG. 12 is completely terminated, the method may return back to operation S39 of FIG. 7.

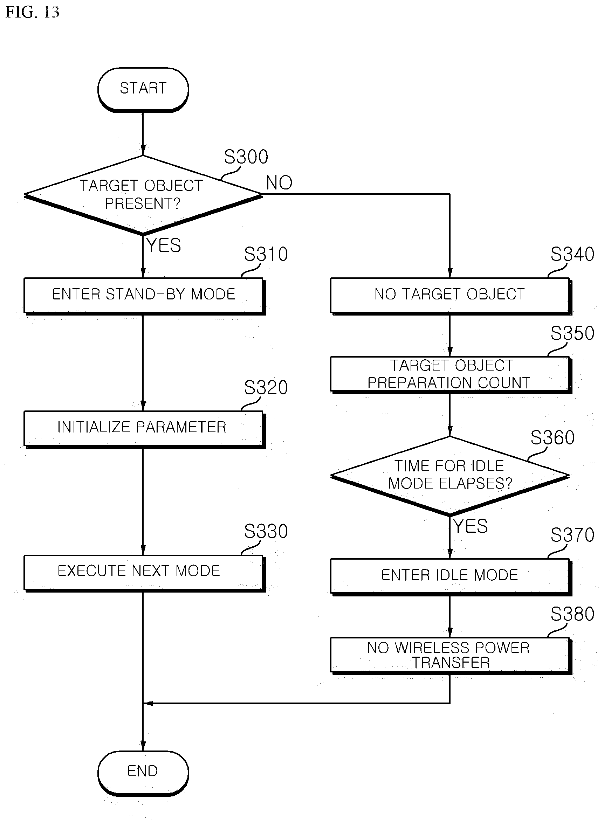

Operations after determination of eccentricity will be described with reference to FIG. 13.

As shown in FIGs. 8 and 9, a target object and whether eccentricity occurs may be determined (S300), and when the target object has a reception coil, an initial frequency may be set or a frequency seep interval may be set depending on an eccentricity degree, and a current mode may enter a stand-by mode according to a corresponding frequency (S310).

In the stand-by mode, a frequency may be swept depending on a corresponding frequency and a set parameter may be initialized (S320), and a current mode may enter a foreign object detection mode and a soft start mode that are next modes (S330).

When the target object 1 is not present (S340), whether a predetermined time for an idle mode executed in a detection preparation operation of the target object 1 may be counted again (S350).

That is, when zero-voltage count is started again and a predetermined time for the idle mode elapses (S360), a current mode may enter the idle mode (S370), and it may be determined that wireless power transfer is not present and an operation may be determined (S380).

As such, in a preparation period, an eccentricity degree may be determined, and in a soft start mode, a start frequency or a frequency sweep interval may be set depending on an eccentricity degree and power may be transmitted according to corresponding control, and accordingly, power for which an eccentricity degree is compensated may be transmitted.

Thus, when the user selects the wireless power transmission mode, if the target device 1 is the small home appliance having the reception coil 15, the current mode may enter the soft start mode, desired power information may be received through communication with the small home appliance having the reception coil 15, which is the target device 1, and a final operation frequency may be switched to a frequency corresponding to target power, and in this case, the eccentricity degree may be compensated for by setting an initial frequency for entry into the final operation frequency and setting a frequency sweep interval, and thus, it may be possible to transmit corresponding output for a short time.

In the case of transition to an operation frequency close to the target power, power of the target power may be wirelessly transmitted to the target device 1 in the normal operation mode.

As such, the current mode may enter the normal operation mode, wireless power transfer may be performed on the small home appliance having a reception coil but may not be performed on no-load, a foreign object, or a general heating container, and the current mode may enter the idle mode and the operation may be stopped.

Thus, while an operation is performed in a predetermined mode in a power transfer preparation period prior to the normal operation mode, desired requested output may be transmitted for a short time by determining whether a target object is present, calculating an eccentricity degree, and compensating for the eccentricity degree.

Through the above solution, the multi-functional wireless power transmission device using one working coil may determine whether eccentricity occurs in a target object, may compensate for this, and may perform wireless power transfer (WPT) in the wireless power transmission mode while selectively driving the wireless power transmission mode or the induction heating mode.

Even if information is not received from a positioned target small home appliance when user mode selection is a wireless power transmission mode, whether eccentricity occurs may be determined, and thus, it may be possible to compensate for eccentricity prior to power transfer.

As such, the present invention may provide a wireless power transmission apparatus for providing an alarm to a user prior to wireless power transfer when a wireless power transmission mode is selected, if a target object is a small home appliance having a reception coil and excessive eccentricity occurs between the corresponding reception coil and a working coil of a transmission side. In this case, whether a foreign object is present as well as whether eccentricity occurs may be determined, and thus, a user alarm may also be provided.

In addition, when wireless power transfer is performed depending on an eccentricity degree, a start frequency of frequency sweep may be controlled or an sweep interval may controlled, and thus, wireless power transfer to which an eccentricity degree is applied may be performed, thereby enhancing power transmission efficiency.

**Claims**

1. A wireless power transmission apparatus (10) for induction heating and for wirelessly transmitting power to a target object (1) comprising:

   a working coil (12, 150) configured to induction-heat the target object and to wirelessly transmit power to the target object (1) depending on a selected mode;
   an inverter (140) configured to be operated based on an operation frequency for providing power to the working coil (12, 150); and
   a controller (190) configured to change the mode depending on a selection of a user and to control the operation frequency depending on the mode,
   wherein upon selection of a wireless power transmission mode, the controller (190) is further configured to calculate an eccentricity degree between the working coil (12, 150) and a reception coil (15) of the target object and to control the operation frequency depending on the calculated eccentricity degree in a preparation period prior to wireless power transfer.

2. The wireless power transmission apparatus (10) of claim 1, wherein the controller (190) is further configured to determine, in the preparation period, the eccentricity degree and/or whether the target object includes a reception coil.

3. The wireless power transmission (10) apparatus of claim 2, wherein the controller (190) is further configured to enter an eccentricity detection mode, upon a mode selection, and to sequentially determine whether the target object (10) is an appliance having the reception coil (15) and whether eccentricity occurs between the working coil (12, 150) and the reception coil (15).

4. The wireless power transmission apparatus (10) according to any one of the preceding claims, further comprising:

a user input unit configured to receive and/or guide a mode selection by a user.

5. The wireless power transmission apparatus (10) of according to any one of the preceding claims, wherein the controller (190) is further configured to detect a resonance current of the working coil (12, 150), and
wherein the controller (190) is further configured to determine, based on the detected resonance current, whether a target object (1) includes a reception coil (15) and/or whether the target object (1) is a home appliance, and/or to configured calculate the eccentricity degree based on the detected resonance current.

6. The wireless power transmission apparatus (10) of claim 5, wherein the controller (190) is configured to detect the resonance current a plurality of times for a predetermined time period, and to perform integration of the detected resonance current, and is further configured to determine whether a target object (1) includes a reception coil (15) and/or to determine whether the target object (1) is an appliance and/or to calculate the eccentricity degree, based on an integrated value of the resonance current.

7. The wireless power transmission apparatus (10) of claim 6, wherein the controller (190) is configured to compensate for the integrated value of the resonance current based on a voltage amplitude of an external power source (110) connected to the wireless power transmission apparatus (110), and is further configured to determine whether a target object (1) includes a reception coil (15) and/or to determine whether the target object (1) is a home appliance and/or to calculate the eccentricity degree, based on the compensated value of the resonance current.

8. The wireless power transmission apparatus of claim 7, wherein the controller (190) is configured to, if the compensated integrated value is smaller than a first threshold value, to determine that the target object (1) is a home appliance having the reception coil (15), and/or
wherein the controller (190) is further configured to calculate the eccentricity degree based on the compensated integrated value of the resonance current, and if the calculated eccentricity degree is equal to or less than a second threshold value, to control the operation frequency based on the eccentricity degree.

9. The wireless power transmission apparatus of claim 8, wherein the controller (190) is configured to control the operation frequency to be swept from a start operation frequency for wireless power transfer to a final operation frequency, wherein the controller (190) is further configured to set the start operation frequency to be lower as the eccentricity degree increases.

10. The wireless power transmission apparatus (10) of claim 8 or 9, wherein the controller (190) is configured to set an incremental frequency increase for sweeping from the start operation frequency for wireless power transfer to the final operation frequency so as to be increased as the eccentricity degree increases.

11. A method of driving a wireless power transmission apparatus (10) for wirelessly transmitting power to and for induction heating a target object (1), the wireless power transmission apparatus (10) including a working coil (12, 150) configured to induction-heat the target object and to wirelessly transmit power to the target object (1) depending on a selected mode, the method comprising:

upon selection of a wireless power transmission mode, a preparation operation of detecting the target object, determining an eccentricity degree between a reception coil (15) of the target object and the working coil (12, 150), and controlling an operation frequency of an inverter (140) of the wireless power transmission apparatus (10) depending on the calculated eccentricity degree; and
a normal operation mode operation of performing the wireless power transmission by controlling the inverter (140) based on the operation frequency.

12. The method of claim 11, wherein the preparation operation includes:

detecting a resonance current while driving the inverter (140) at a first operation frequency and determining whether the target object (1) is a home appliance having a reception coil (15) based on the detected resonance current;

calculating the eccentricity degree between the reception coil (15) and the working coil (12, 150) based on the detected resonance current; and

controlling the operation frequency of the inverter (140) for the wireless power transfer based on the calculated eccentricity degree.

13. The method of claim 12, wherein detecting the resonance current includes: detecting the resonance current a plurality of times for a predetermined time period, performing integration of the detected resonance current, and determining whether the target object having the reception coil (15) is present based on an integrated value of the resonance current.

14. The method of claim 13, further comprising:

compensating for the integrated value of the resonance current based on a voltage amplitude of an external power source (110) connected to the wireless power transmission apparatus (10), and

determining that the target object (1) is a home appliance having the reception coil (1) if the compensated integrated value is smaller than a first threshold value, and

calculating the eccentricity degree based on the integrated value of the resonance current, and, if the calculated eccentricity degree is equal to or smaller than a second threshold value, controlling the operation frequency based on the eccentricity degree.

15. The method of claim 14, wherein the controlling the operation frequency includes controlling the operation frequency to be swept from a start operation frequency for wireless power transfer to a final operation frequency, wherein the start frequency is set to be lower as the eccentricity degree increases.

FIG. 1

FIG. 2

FIG. 3

FIG. 4

FIG. 5

FIG. 6

WPT FUNCTION Key On

| DRIVE INVERTER | 125ms — 75k 55k ... 75k 55k | | 125ms — 75k | 44k ATTEMPT COMMUNICATION PAIRING 44k | COMMUNICATION CONNECTION | NORMAL OPERATION | REQUESTED POWER ... |
|---|---|---|---|---|---|---|---|
| | TARGET OBJECT DETECTION | | ADDITIONAL DETECTION | | — | | DRIVE |
| MODE OF TRANSMISSION SIDE | TARGET OBJECT DETECTION MODE | | STAND-BY MODE | FIRST ADDITIONAL DETECTION MODE | SOFT START MODE | NORMAL OPERATION MODE | |
| MODE OF RECEPTION SIDE | SLEEP MODE | | | WAKEUP MODE | | WAKEUP MODE OR POWERING MODE | |

EP 3 872 960 A1

FIG. 7

START

START ZERO-VOLTAGE COUNT — S21

SET BASIC COUNT FOR PREDETERMINED TIME — S22

SET TIME FOR ENTRY INTO IDLE MODE — S23

S24 — PREDETERMINED TIME ELAPSES? — NO

YES — S25

COMPLETE TARGET OBJECT DETECTION PREPARATION

S26 — INITIALIZE PARAMETER

END

S27 — NEXT COUNT AFTER DETECTION PREPARATION? — NO

YES — S28 — RESET PARAMETER

S29 — SET TO INITIAL FREQUENCY

S32 — COUNT L NUMBER OF TIMES AFTER DETECTION PREPARATION? — NO

YES — S33 — CHANGE TO FIRST FREQUENCY

S34 — DETECTION PREPARATION + L < CURRENT COUNT < DETECTION PREPARATION + M? — NO

YES — S35 — ACCUMULATE RESONANCE CURRENT

S36 — CURRENT COUNT M? — NO

YES — S37 — DETERMINE TARGET OBJECT

S38 — DETERMINE ECCENTRICITY

S39 — RETURN

FIG. 8

```
                    ┌─────────┐
                    │  START  │
                    └────┬────┘
                         │            S100
              ┌──────────▼──────────┐
              │ PRIMARILY COMPENSATE │
              │   FOR INPUT VOLTAGE  │
              └──────────┬──────────┘
                         │            S110
              ┌──────────▼──────────┐
              │SECONDARILY COMPENSATE│
              │   FOR INPUT VOLTAGE  │
              └──────────┬──────────┘
                         │            S120
              ┌──────────▼──────────┐
              │  CALCULATE DETECTION │
              │ VOLTAGE OF TARGET OBJECT│
              └──────────┬──────────┘
                         │            S130
                    ╱────▼────╲          NO
             ╱ TARGET OBJECT DETECTION ╲──────────────┐
             ╲ VALUE<FIRST THRESHOLD    ╱              │
                ╲    VALUE?   ╱                        │
                    YES                                │
                     │          S140                   │   S150
          ┌──────────▼──────────┐          ┌──────────▼──────────┐
          │ DETERMINE THAT TARGET│          │ DETERMINE THAT TARGET│
          │  OBJECT IS PRESENT   │          │ OBJECT IS NOT PRESENT│
          └──────────┬──────────┘          └──────────┬──────────┘
                     │          S160                   │
          ┌──────────▼──────────┐                      │
          │RETURN TO DRIVE INVERTER│                    │
          └──────────┬──────────┘                      │
                     │◄───────────────────────────────┘
                ┌────▼────┐
                │   END   │
                └─────────┘
```

FIG. 9

START

S200
CALCULATE INPUT
VOLTAGE-COMPENSATED
INTEGRATED VALUE
OF RESONANCE CURRENT

S210
CALCULATE ECCENTRICITY
DEGREE

S220
ECCENTRICITY
DEGREE>SECOND
THRESHOLD VALUE?

NO

YES

S230
ALARM AS EXCESSIVE
ECCENTRICITY

APPLY ECCENTRICITY DEGREE
AND CONTROL DRIVING
FREQUENCY
S240

END

FIG. 10

FIG.11

FIG. 12A

FIG. 12B

FIG. 13

START

S300
TARGET OBJECT
PRESENT?

NO

YES

S310
ENTER STAND-BY MODE

S340
NO TARGET OBJECT

S350
TARGET OBJECT
PREPARATION COUNT

S320
INITIALIZE PARAMETER

S360
TIME FOR IDLE
MODE ELAPSES?

YES

S330
EXECUTE NEXT MODE

S370
ENTER IDLE MODE

S380
NO WIRELESS POWER
TRANSFER

END

Europäisches
Patentamt

European
Patent Office

Office européen
des brevets

## EUROPEAN SEARCH REPORT

Application Number

EP 21 15 9341

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/226756 A1 (ARNAL VALERO ADOLFO [ES] ET AL) 22 September 2011 (2011-09-22) * abstract; claims; figures * * paragraphs [0001], [0006], [0007], [0021] - [0029] * | 1-15 | INV. H02J50/90 H05B6/10 |
| A | US 2019/366866 A1 (CHA JAE EUN [KR] ET AL) 5 December 2019 (2019-12-05) * abstract; claim 1; figures * * paragraph [0194] * | 1-15 | |
| A | US 4 996 405 A (POUMEY MICHEL [FR] ET AL) 26 February 1991 (1991-02-26) * the whole document * | 1,11 | |

TECHNICAL FIELDS
SEARCHED     (IPC)

H02J
H05B

The present search report has been drawn up for all claims

| Place of search | Date of completion of the search | Examiner |
|---|---|---|
| Munich | 12 July 2021 | Rother, Stefan |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 21 15 9341

This annex lists the patent family members relating to the patent documents cited in the above-mentioned European search report.
The members are as contained in the European Patent Office EDP file on
The European Patent Office is in no way liable for these particulars which are merely given for the purpose of information.

12-07-2021

| Patent document cited in search report | | | Publication date | Patent family member(s) | | | Publication date |
|---|---|---|---|---|---|---|---|
| US 2011226756 | A1 | | 22-09-2011 | CN | 102257877 | A | 23-11-2011 |
| | | | | CN | 105228280 | A | 06-01-2016 |
| | | | | EP | 2380399 | A1 | 26-10-2011 |
| | | | | ES | 2352772 | A1 | 23-02-2011 |
| | | | | ES | 2393846 | T3 | 28-12-2012 |
| | | | | KR | 20110103427 | A | 20-09-2011 |
| | | | | PL | 2380399 | T3 | 29-03-2013 |
| | | | | US | 2011226756 | A1 | 22-09-2011 |
| | | | | WO | 2010069825 | A1 | 24-06-2010 |
| US 2019366866 | A1 | | 05-12-2019 | NONE | | | |
| US 4996405 | A | | 26-02-1991 | CA | 2014707 | A1 | 18-10-1990 |
| | | | | EP | 0394148 | A1 | 24-10-1990 |
| | | | | FR | 2646049 | A1 | 19-10-1990 |
| | | | | JP | H02299192 | A | 11-12-1990 |
| | | | | US | 4996405 | A | 26-02-1991 |

EPO FORM P0459

For more details about this annex : see Official Journal of the European Patent Office, No. 12/82

**EP 3 872 960 A1**

**REFERENCES CITED IN THE DESCRIPTION**

**Patent documents cited in the description**

- KR 1020200024270
- KR 1020160123672
- KR 176449681
- US 8912686 B
- US 20190123589 A
- KR 201401004242